# EUROPEAN PATENT SPECIFICATION

(11) **EP 1 281 265 B1**
(45) Date of publication and mention of the grant of the patent: **15.08.2007**
(21) Application number: 01936247.4
(22) Date of filing: 19.04.2001
(51) Int. Cl.: H04L 29/06

(54) **METHOD FOR THE AUTHORIZATION OF TRANSACTIONS**
VERFAHREN ZUR TRANSAKTIONENSERMÄCHTIGUNG
PROCEDE POUR L'AUTORISATION DE TRANSACTIONS

(30) Priority: 08.05.2000 EP 00109713
(43) Date of publication of application: 05.02.2003
(73) Proprietor: TELEFONAKTIEBOLAGET LM ERICSSON (publ), 164 83 Stockholm (SE)
(72) Inventor: SCHUBA, Marko, 52134 Herzogenrath (DE); WRONA, Konrad, 52074 Aachen (DE); ZAVAGLI, Guido, c/o Nippon Ericsson K.K., Tokyo 112-0004 (JP)
(74) Representative: Tonscheidt, Andreas
(86) International application number: PCT/EP2001/004422
(87) International publication number: WO 2001/086909

(56) References cited:
- FR-A- 2 740 291
- US-A- 5 671 279
- US-A- 5 878 141

## Description

### Technical field of the invention

The present invention relates to a method according to the preamble of claim 1. Devices and software units embodying the invention are also described.

### Background

Digital signatures are commonly used in security and electronic commerce protocols to provide for an authentication of involved entities and transaction authorization. For efficiency and security reasons, digital signatures are normally applied to a hash of data to be signed instead of the data itself. A hash is a unique result which is created by a function from input data and which has a fixed size regardless of the amount of input data. Preferably, minimum changes in the input data cause maximum changes in the hash and the probability of possible results is preferably equal for an arbitrary input.

An authorization is often necessary for proxy based services used by wireless user equipment, e.g. a WAP (Wireless Application Protocol) phone. An example of such a service is a secure credit card payment using the Secure Electronic Transaction protocol. In the state of the art, the authorization can be performed using the signText() function defined in the WML (Wireless Markup Language) Script Crypto Library (Wireless Application Forum, Ltd, 1999). The function requests that a user digitally signs a text string. The string is displayed to the user who can choose either to approve the content or disapprove it. The latter alternative generally cancels the execution of the function. If the user approves the content, the string is signed and returned to the entity requesting the authorization, e.g. a program executed on a user equipment in a communication system. The signText() function is targeted at data that can be displayed to a user as the specification requires that the user equipment must display the string for which the authorization is requested. This procedure has the advantage that the user is able to check the content which is signed.

However, it is often necessary to transmit large amounts of data to the user equipment which is especially disadvantageous for wireless connections with a low data transfer rate. Furthermore, it is sometimes impossible to display any or a meaningful text to the user which enables him to perform a conscious authorization. Often, proxy-based mobile applications are used for providing interoperability between WAP devices and customary Internet services and protocols. For proxy-based applications, the largest share of a transaction processing load is performed by a fixed network node and the engagement of the mobile terminal is minimized to the most critical functionality, especially digital signature operations. In this case, typically a need for signing a binary value arises when a signature request is sent by the fixed network node to the user. A binary content of the string in an authorization request has an obvious lack of meaning for the user or can even be unsuitable for display on a WAP terminal.

Patent US 5,671,279 describes an electronic payment system for customers, merchants and banks to perform credit card payments over fixed networks such as the Internet. In said system authorization requests and responses are exchanged between customer and merchant. Digital signatures are used to authenticate the sender of a message. To identify a transaction, a unique transaction number is included in the request and response. Hashes of original messages concatenated with the time of receipt are used for acknowledgements. However, the method is intended for a fixed network in which large amounts of data are transmitted to the user. Therefore, it is not applicable for a communication system allowing only transmissions at low data rates. The problem of a meaningless content does not arise, because the whole content for authorization is transmitted to the user.

Patent US 5,878,141 relates to an electronic purchasing system in which a purchaser receives a request to authorize a purchase transaction and authorizes the purchase. A signature is used for authorization, said signature being applied in a remote processing unit and not in the user equipment, making the method only applicable in a system with a corresponding remote processing unit. For authentication of messages between the remote processing unit and the user equipment, signatures can be applied to a hash of the message. Again, the method is intended for a fixed network in which large amounts of data are transmitted to the user and not adapted to a system with low transmission rates. The problem of a meaningless content does also not arise, because the whole content for authorization can be transmitted to the user.

### Summary and description of the invention

It is an object of the present invention to obviate the above disadvantages and provide an authorization method which allows a conscious signature of binary data by a user. It is a further object, to provide a method which offers the opportunity to reduce the amount of data required for a conscious authorization.

According to the invention, the method described in claim 1 is performed. Furthermore, the invention is embodied in devices and program units as described in claims 14, 17 and 25. Advantageous embodiments are described in the dependent claims.

In the proposed method, user equipment receives an authorization request with an identifier of a transaction and replies to the request with an authorization response. The authorization request corresponds to a content which is to be authorized, e.g. a transaction. A preferable identifier is determined in a unique way by the content and can be calculated from it. Generally, the identifier is a binary data value which is incomprehensible to a user. Therefore, an indication for the authorization request is determined by the sender of the request or by the user equipment, i.e. before the request is sent or after it is received. In a simple embodiment of the method, the indication can be a message that a confirmation of received data is requested, i.e. the same indication can be used for all requests, optionally amended by the identity of the sender. The indication is displayed by the user equipment, e.g. on the screen of a mobile phone. Alternatively or in addition, an output of the indication is possible in a different way, for example by an acoustical or vibratory signal to emphasize the indication or to allow authorizations by blind users.

The user performs an input into the user equipment to approve or disapprove the authorization request, for example by using a keypad of the device or by oral input if the user equipment comprises a speech processing unit. In case of an approving input of the user, a signature of the identifier is performed by a signing function, generally using a corresponding digital key of the user. An authorization response according to the approval or disapproval is sent from the user equipment to the sender of the authorization request. An approving response comprises the signed identifier to ensure both that the signature was performed by the user equipment and that the authorization response corresponds to the content for which the authorization request was sent.

The proposed method has the advantage, that the user signs only requests with a comprehensible content. The amount of data transferred to the user equipment can be reduced because the displayed text generally differs from the content for approval. Preferably, the identifier has a fixed length to simplify the handling of the authorization request and response. The security of the method is ensured by the signature of the sender of the authorization response, even if a connection to the receiver of the response is not classified as safe. Signing a random binary value provides also the possibility of authentication and guarding against replay attacks in which a signature is intercepted by a third party and appended to a further message. A corresponding signing functionality is preferably an integral part of any cryptography application program interface and is provided by the proposed method.

In a preferable embodiment of the invention, the identifier is a hash value of the content which is to be authorized. In this way, the identifier has an advantageous fixed length. A hash value is especially sensitive to small changes in the content so that typical variations with a fraudulent purpose like changing a single or few figures in a contract can be excluded. A hash value with a comparatively small length, e.g. in the range of some 50 to several hundred bits, gives a sufficiently clear indication of the content for approval for most purposes.

It is proposed that a check is performed whether the authorization request comprises a string and the indication is the detected string or a default string else. The string contains preferably a short text which identifies the content for authorization to the user in a clear way. It can, for example, comprise a reference text describing the content for authorization or a short reference to the content as a whole like a document number or contract number. For orders and purchases, a short description and the number of selected items, the amount for each item and the total amount to be paid are suitable elements of the string. A default string is preferably a general information that a transaction is to be authorized, optionally with a warning that an approval constitutes a completion of a contract. It is possible that the user equipment has a stored set with several default strings which are displayed according to parameters in the authorization request.

The authorization response preferably includes the string displayed, i.e. the string sent with the authorization request or the default string. For this purpose, the authorization request can comprise a parameter which indicates whether the sender expects that the response is amended by the string displayed. Optionally, the displayed string can be included in any authorization response. Storing the displayed string provides the receiver of the authorization response with a proof of the indication if legal disputes about the authorization procedure arise at a later time.

It is proposed that a check is performed whether a connection is classified as safe and the indication comprises a result of the check or is selected according to the check. In this way, the user receives an information whether the authorization request is received from a secure source. A safe connection is for example an end to end wireless transport layer security connection according to the WAP protocol stack.

An advantageous authorization request comprises a signature of the sender. In this case, a check of the sender signature is performed in the user equipment which has a processing system adapted to this purpose and preferably a memory with corresponding authentication information. The indication can comprise the result of the check or be selected according to the result. It is proposed that the authorization procedure is cancelled if neither the connection is safe nor a signature of the sender is included in the request or if a signature is invalid.

It is proposed for an authorization request or an authorization response that a concatenation of the identifier and at least one further parameter is signed. Especially, the indication displayed to the user can be included in the signed content as a confirmation. Signing the concatenation provides a secure authentication of all concatenated parameters with low computational requirements and ensures that the concatenated parameters were signed in a single procedure.

Preferably, a signature depends on a parameter which varies in consecutive messages to avoid a replay attack. For this purpose, the signed content can for example comprise a time stamp, a random value or a counter. The variable parameter is preferably included in the message with the signature to allow the authentication by the receiver. It is possible that the signature depends on more than one variable parameter, e.g. if a hashing function includes a random value in the hash which is then be concatenated with a time stamp before the signature.

The method is especially suited for an authorization request which is sent by a first server after reception of one or several messages from a further entity, e.g. a further server or another device or application. The first server is for example a mobile server for adapting messages and messaging sequences between a further entity in a fixed network, e.g. the Internet, and wireless user equipment. The mobile server processes and replies to messages from the further entity in the fixed network to reduce the amount of data sent over wireless connections to user equipment. The further entity can, for example, process transactions for a merchant who offers goods or services which have to be paid. In this case, the authorization procedure is used to perform the payment.

An advantageous message from the further entity comprises the indication, e.g. a short reference string for the content which is to be approved, or a parameter determining the indication. In this way, an ambiguous determination of the indication by the server is avoided and a service provider has an improved control of the information displayed by the user equipment.

Generally, one or several messages from the further entity comprise the content for approval from which the identifier is determined, e.g. the text of a contract from which the server calculates a hash value. Preferably, the server forwards an approved identifier to the further entity as proof that the authorization was performed by the user equipment.

Preferably, the server stores the indication or forwards it to the further entity. In this way, a proof can be stored which indication was displayed to the user. The indication can be stored or forwarded after it is determined for inclusion into the authorization request or after extraction from the authorization response.

A server for processing authorization procedures in a communication system has an interface to exchange messages with user equipment of the communication system. Generally, messages are relayed by further devices in the communication system, e.g. routers forwarding the messages or radio base stations providing a wireless connection to the user equipment. The server has a processing system with a unit to send an authorization request for a content which is to be authorized to the user equipment and to receive an authorization response from the user equipment. Preferably, the unit is a software program.

In a server according to the invention, the processing system determines an identifier for the content and includes the identifier into the authorization request. Preferably, the identifier is a hash value calculated from the content which is to be authorized. Furthermore, the processing system determines an indication for the content and includes the indication also into the authorization request. The server checks the authorization response for the identifier signed by the user equipment, i.e. for an approval of the request. The server can perform any steps of the above- described methods which relate to the server.

An advantageous server comprises an interface to receive messages from a further entity over the communication system, e.g. from a further server. In this case, the processing system is adapted to extract the content for authorization from a message received from the further network entity and to send a reply to the further network entity. The reply is determined by the authorization response, i.e. the reply indicates to the further entity whether the authorization is approved or disapproved.

A user equipment for a communication system, for example a mobile phone in a mobile communication system, has a transmission unit to receive and send messages. The messages comprise for example signaling messages for controlling connections and payload messages to transmit data or speech and especially authorization requests and authorization responses. Units of the user equipment process input of a user which is entered for example by a keypad and perform output to the user, e.g. with a display. Furthermore, parameters can be signed with a digital key of the user by a corresponding unit of the equipment. The units can comprise hardware parts, e.g. a transceiver in the transmission unit, circuitry for control of a display in the output unit and circuitry for control of a keypad in the input unit. The units can also include software code which is executed in a processing system of the user equipment. Especially, the signing unit will generally be implemented by a software function.

The processing system executes an operating software controlling said units. It is adapted to process an authorization request with an identifier of a transaction and to reply to the request with an authorization response. The identifier is preferably a hash value of a content which is to be authorized. The processing system includes a unit, preferably embodied as software code, to determine an indication for the request, to initiate the output of the indication by the output unit and to wait for an approval of the request by the user received via the input unit. According to the approval, the processing system initiates the sending of an authorization response by the transmission unit. In an approving authorization response, the processing system includes the signed identifier which is determined by the signing unit. For this purpose, a digital key can be stored in a memory of the user equipment. A skilled person is aware that all described steps executed by the processing system can be performed by software code executed in the processing circuitry.

In a preferable user equipment, the processing system performs a check whether the authorization request comprises a text string and selects the detected string as indication or a default string else.

It is proposed, that the processing system includes the displayed indication in the authorization response.

Advantageously, the processing system performs a check whether a connection is classified as safe. For this purpose, parameters defining whether a connection is safe can be stored in a memory of the user equipment and be compared to the corresponding parameters of a present connection. The processing system includes the result of the check in the indication or selects the indication according to the check.

To enhance the security of a transaction, a preferable user equipment checks whether the authorization request comprises a signature of the sender. The equipment performs a check of the sender signature. It is proposed that the processing system includes the result of the check in the indication or selects the indication according to the check.

In an advantageous user equipment, the processing system signs a concatenation of the identifier and at least one further parameter.

Preferably, the processing system includes a parameter which varies in consecutive authorization requests or authorization responses into a signed content, e.g. a hash value, optionally concatenated with further parameters.

A computer program unit for receiving an authorization request with an identifier of a transaction and replying to the request with an authorization response can be stored on a data carrier or can be directly executable in a processing system of user equipment. Especially, parts of a program unit according to the invention can be embodied by a software function which is called by the authorization request. The unit comprises code for reception of the authorization request, i.e. for identification that an authorization request was received and extraction of parameters from the request, especially an identifier for the authorization request. The unit determines an indication for the authorization request, for example by extracting a text string from the authorization request or by selecting it from a memory according to parameters in the request. The unit initiates an output of the indication which is generally performed by an output unit. When an input approving or disapproving the authorization request is received, the program unit determines the authorization response according to the input. For an approval, a signature of the identifier is initiated and performed by the program unit or by a further unit. The signed identifier is included in an approving authorization response.

The foregoing and other objects, features and advantages of the present invention will become more apparent in the following detailed description of preferred embodiments as illustrated in the accompanying drawings.

### Brief description of the drawings

- Fig. 1: shows a transaction authorization according to the invention using a signed hash value.
- Fig. 2: shows a further transaction authorization according to the invention.
- Fig. 3: shows a transaction according to the invention involving several entities.
- Fig. 4: shows a user equipment according to the invention.
- Fig. 5: shows a flow chart of a process executed in a server according to the invention

### Detailed description of preferred embodiments

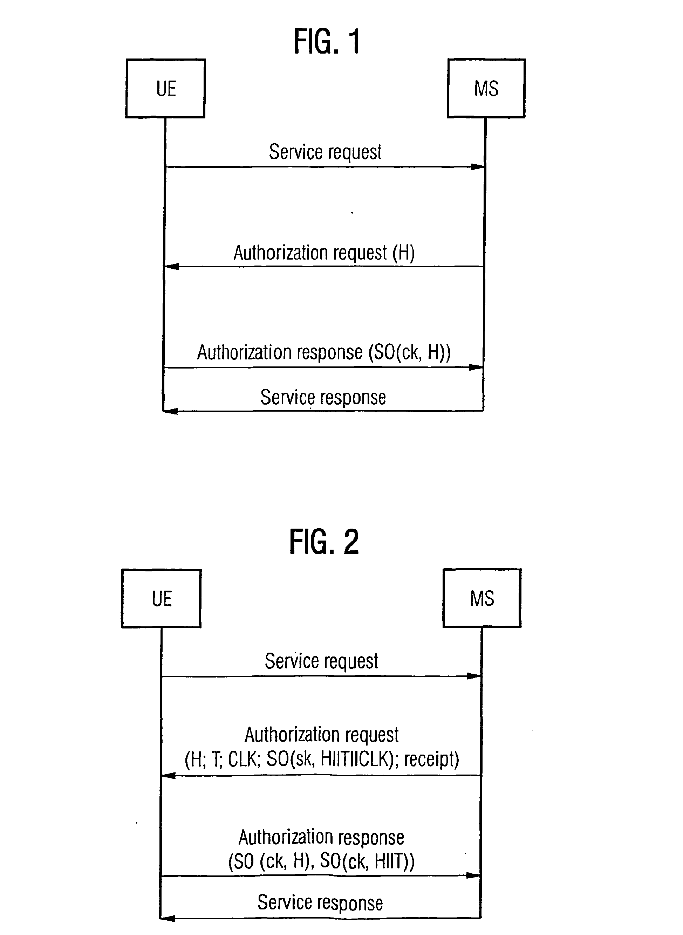

Figure 1 shows an example of an authorization procedure in the proposed method between a user equipment UE, e.g. a WAP terminal, and a server MS, e.g. a WAP server. Over a communication system, the server MS is generally connectable to other entities, for example further servers or application programs. A program executed in the processing system of the user equipment UE sends a service request to the server MS which processes the requested service. During this procedure, the server MS can exchange messages with other entities in the communication system. The server MS generates a binary identifier H which is sent with an authorization request to the user equipment UE for approval, i.e. for signature. Generally, the binary identifier H is a hash of a message sent from a further entity to the server.

As depicted in figure 2, the server MS can also generate a text string T which is included in the authorization request and displayed by the user equipment UE. The text string is a comment for the user identifying the content which is to be signed and can comprise all or a part of the hashed data, e.g. an amount for payment, a document number, the title of a contract or a list of items ordered. To allow a validation of the relation between the string T and identifier H by the user equipment UE, preferably a concatenation of the identifier H and the string T is signed by the server MS, i.e. a parameter SO(sk, H∥T) is included into the authorization request wherein SO denotes the signing function, sk the signature key of the server MS and 11 is the concatenation symbol. The text string and the server's signature are optional parameters of the authorization request. Furthermore, the authorization request can comprise a parameter "receipt" which is preferably a boolean value and which indicates if a user's receipt is expected by the server MS in the response.

After reception of the authorization request, the user equipment UE checks the number of arguments included. In case there is only one argument, i.e. only the mandatory binary identifier H as depicted in figure 1, the user equipment UE displays a message to the user that a binary value to be signed was received and asks for confirmation. The user can either accept or reject to perform the signature process. In order to enhance the security, the single parameter version of the authorization request is accepted by an advantageous user equipment UE only in case of a secure connection.

In case of an authorization request with two or more arguments, one argument is preferably a signature of the server MS. The user equipment UE verifies the server signature SO (sk, ...) with sk denoting a signature key of the server. A further argument is preferably a text string T which is displayed by the user equipment UE in addition to the result of the signature verification. The user is prompted to accept or reject the signature process, for example by pressing a YES key or a NO key on a keypad of the user equipment UE or by pronouncing a corresponding command if the user equipment has a speech processing unit. Optionally, the arguments of the authorization request, e.g. a triple H, T, SO (sk, H||T), can be saved in a memory of the user equipment UE for future use.

The authorization response from the user equipment UE comprises the binary identifier H signed by the user equipment UE, i.e. SO (ck, H) wherein ck is an authorization key of the user equipment UE. The value SO (ck, H) ensures that the authorization request was signed by the user equipment and identifies clearly the signed content. Optionally, a signed receipt containing a concatenation of the value which is to be signed and the text string for display can be demanded by the server, e.g. by the parameter "receipt" in figure 2. Storing the receipts by the server provides for a repudiation of the signed transaction content by the user in case of future disputes about the signed content. The receipt provides a proof that the user was informed about the content of the signed data.

To improve authorization of transactions by user equipment UE which is adapted both to using the described method and the Wireless Application Protocol (WAP), a new WMLScript Crypto Library function is proposed which is denoted "signData()" below. It is alternatively conceivable to adapt an existing function for this purpose but preferably the new function is added to the WML for clarity reasons. The function signData() is application independent and can be used by every WAP secure application layer protocol. The table shows an advantageous function specification which can be used in order to sign a hash value. In this case, the authorization request is a call of the signData() function in the client, i.e. the user equipment UE.

| | |
|---|---|
| WMLScript: | a) signData(H); |
| | b) signData(H, T, SO(sk, H∥T),receipt); |
| Parameters: | H, T, sk, receipt, SO(sk, H∥T) |
| Output: | If receipt=FALSE: The binary value signed by the user equipment: SO (ck, H) |
| | If receipt=TRUE: The binary value signed by a user equipment: SO (ck, H) and a receipt: SO (ck, H∥T) |
| Associated Event: | User equipment displays either: |
| | the string T and a result of SO (sk, H∥T) verification, or |
| | a message informing that identifier H is not authenticated by a server. |
| | The user has to confirm or disapprove every signing operation. |

In the table, H denotes binary data to be signed (e.g. a hash value). SO (sk, H∥T) are the concatenated H and T values signed by a server. A text string T is optionally displayed to the user. The parameter sk is an authentication key for the server MS, ck is a key for the user equipment UE.

Since an authorization request, e.g. a function call signData(), can be initiated from any server or application, a user is not always aware of the origin. To avoid improper use of the request, an authorization response by the unauthenticated version of the signData() function is preferably performed only in case of an end-to-end secure connection between a WAP terminal and a WAP server, e.g. a WTLS/SSL (Wireless Transport Layer Security/Secure Sockets Layer) connection or an end-to-end WTLS connection. Else the function is cancelled without sending a response.

Unless confidentiality is required, the authenticated signData() function can be used without WTLS if the signature from a trusted server is determined as valid.

Digital signatures of the hash value provide mutual authentication between a WAP user equipment and a WAP server.

Preferably, a mechanism is provided in the authorization request and authorization response to avoid replay attacks. For example, a time dependent parameter CLK is added to the input parameters for the signing function SO. When using a function signData an advantageous set of parameters is therefore (H, T, CLK, SO (sk, H∥T∥CLK)). To allow a verification of the signature by the user equipment UE or the server MS, respectively, the parameter CLK is included in the authorization request or response. Since the value SO (..., CLK) is generally different for every transaction, a replay attack can be excluded.

The proposed authorization procedure can advantageously also be used for authentication of the user equipment by using the authorization request to approve the authentication.

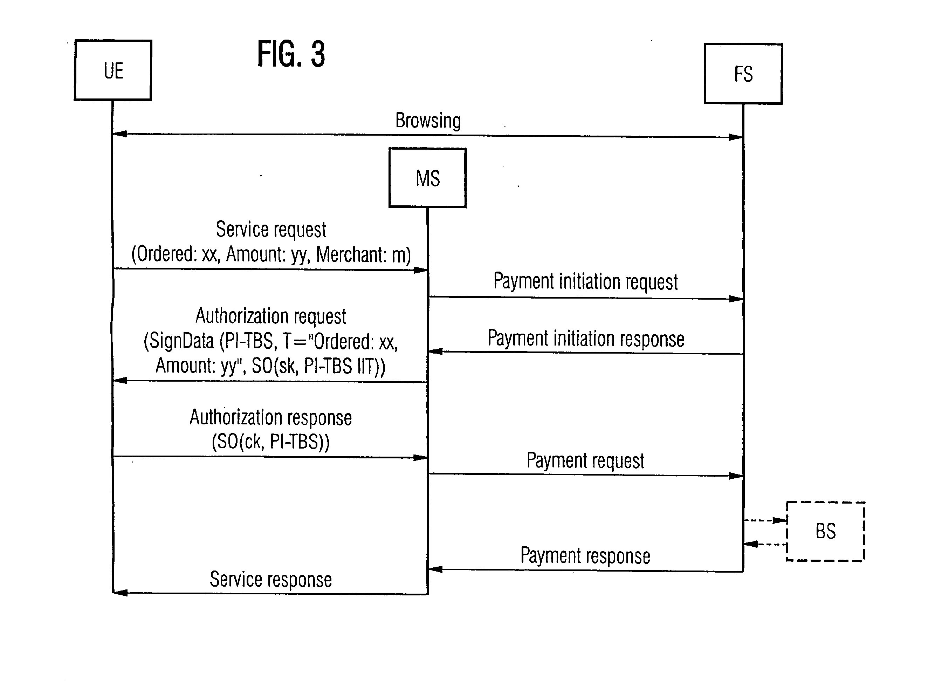

In figure 3, an exemplary transaction flow for a secure payment is depicted. In the example, the user equipment UE is a WAP terminal, e.g. a mobile phone, while the server is a Secure Electronic Transaction mobile server MS. A further server FS is operated by a merchant or supplier with whom the user of the equipment UE wants to perform a transaction. The further server FS also supports the Secure Electronic Transaction protocol. The mobile server MS and the further server FS are connected over the Internet.

If a user wants, for example, to purchase a plane ticket with a credit card, he starts a browser application on his user equipment, browses to the WAP site of a travel agency and exchanges messages to select a flight, date and seat. The user selects a protocol for the purchase, e.g. the Secure Electronic Transaction protocol, and sends a service request with the selected items to the mobile server MS. Optionally, the request contains further information, e.g. a selected merchant if several merchants share the further server FS. The mobile server MS initiates the payment transaction with the further server FS by a payment initiation request forwarding the selection of the user. The further server replies with a payment initiation response message which comprises authentication certificates of the supplier and a content which has to be authorized by the user, generally a contract or a part of a contract like an amount for a purchase. In the example, the content preferably comprises the selected flight, date and seat together with the amount for the ticket.

The mobile server MS checks the validity of the certificates and calculates a hash of the content received from the further server FS for authorization. If the content comprises a text which is comprehensible to the user the mobile server preferably selects a string which indicates the transaction, e.g. ordered items and an amount for a purchase or the heading of a contract. The mobile server MS sends the hash of the content and preferably the text string to the user equipment UE. For this purpose, an authorization request with a call of the function signText() can be used if the user equipment UE is a WAP terminal.

In the example, a multiple hash denoted PI-TBS is used. The multiple hash comprises at least a first hash value determined from a first group of parameters, e.g. the ordered items and an amount for the purchase, and a second hash value determined from a second group of parameters, e.g. the amount for the purchase and a credit card number or other account information. Parameters can be parts of two or more groups. The value PI-TBS is a further hash determined from the hash values for the parameter groups. Consequently, contents for different receivers, e.g. the merchant receiving an order and the bank with an account for the user, can be authorized in a single transaction while any receiver can only access those parameters which are necessary for him.

If the authorization request is authenticated by a signature of the mobile server MS, the user equipment UE verifies the signature and displays the content of a received text string to the user or a default string else. In case of an unauthenticated authorization request, a preferable user equipment UE checks whether the connection used is classified as secure or not. For example, a WAP terminal checks the status of the WTLS connection. If the connection is not classified as secure, the authorization request is denied and a corresponding information is shown to the user. If a secure connection is used, preferably an information that unauthenticated data is received for signing is displayed to the user.

The user equipment UE asks the user to approve or disapprove the signing operation and transmits his answer to the mobile server in an authorization response. If the user disapproves the signing or does not enter a response within a predetermined time interval or enters an invalid response, the procedure is preferably cancelled and a corresponding response is sent to the mobile server MS. If the user approves the signing, the user equipment UE signs the hash with his private key ck and sends it back to the mobile server MS.

The mobile server MS includes the answer of the user, especially the signed hash SO (ck, PI-TBS) in a payment request message and sends it to the further server FS. In the example, the payment request message is a Secure Electronic Transaction payment request. The further server can either accept or reject the payment request according to stored conditions, especially if the user is a regular customer and has an account. Alternatively, the further server can in turn initiate a dialogue, e.g. to a third server BS of a bank with an account indicated in the payment request, to identify whether the payment request is acceptable before a payment response is sent. With the multiple hash PI-TBS, the first hash from the first parameter group can be evaluated in the further server FS while the second hash from the second parameter group can be forwarded to the third server BS for evaluation. In the payment response, the further server FS notifies the mobile server whether it accepted the payment request. After receiving the payment response from the further server FS, the mobile server MS forwards the payment result, i.e. parameters from the payment response indicating the confirmation or rejection of the transaction content by the further server FS to the user equipment UE. For this purpose, a service response message is used which ends the transaction to the user equipment UE.

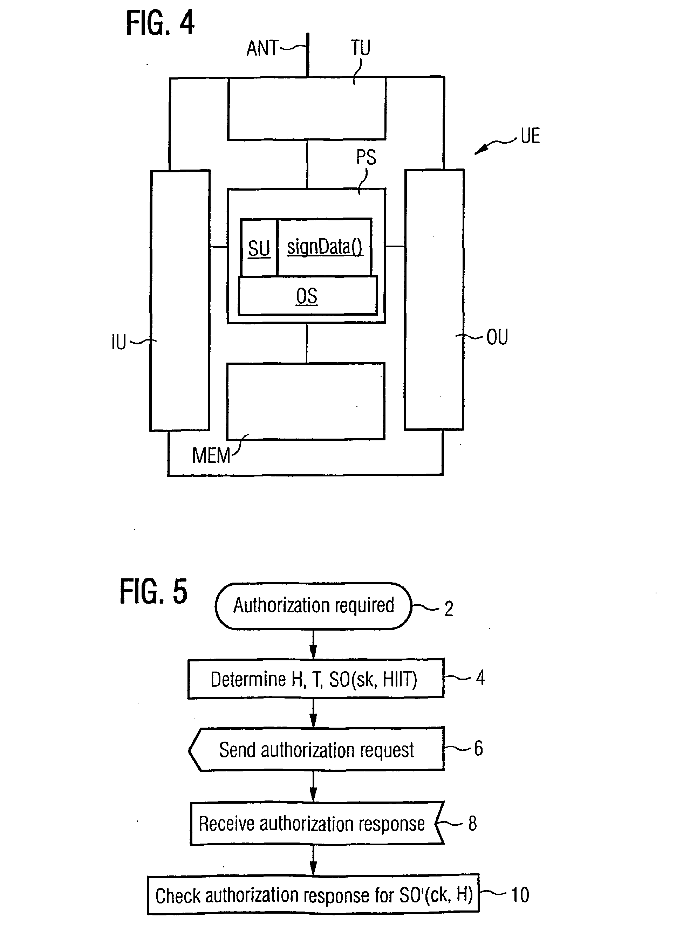

Figure 4 shows user equipment for processing authorization procedures. The user equipment is for example a mobile phone or another terminal equipment, e.g. a personal digital assistant or a laptop. It comprises an input unit IU with a keypad and corresponding control circuitry and an output unit OU with a display and corresponding control circuitry. A transmission unit TU with a transceiver allows wireless connections over an antenna ANT to a communication system. All units are controlled by a processing system PS which can access a memory MEM. The units can include software code which is executed in the processing system PS and can share hardware and software, e.g. if the keypad is displayed on a touch screen.

When an operating software OS executed in the processing system PS receives an authorization request via transmission unit TU, a software unit for processing the authorization request is started. A preferable software unit is the function signData(). The function signData() extracts parameters from the request, especially an identifier H corresponding to a transaction and a text string T. The function signData() determines an indication for the request, i.e. the text string T or a default string stored in the memory MEM if the authorization request does not include a text string T. The function signData() then initiates an output of the indication by the output unit OU and waits for an approval of the request by the user which is received via the input unit IU. If the input approves the authorization, the function signData() initiates a signing of the identifier H, which is generally performed by separate signing unit SU executed in the processing system. According to the approval, the function signData() determines an authorization response and initiates the sending of the response by the transmission unit TU. The authorization response includes the signed identifier SO (ck, H).

A flow chart of a process for authorization in a server according to the invention is depicted in figure 5. In an initial step 2, the server detects that an authorization is necessary. For example, the server can receive a message requesting an authorization from another entity in a communication system or an application executed on the server requires an authorization. Parameters necessary for an authorization request are determined by a procedure 4. As identifier H, a hash value is calculated from the content which is to be authorized. Furthermore, an indication T for display to a user is determined and a signature of the concatenated identifier H and indication T by a digital key sk of the server is performed with a signing function SO.

The parameters are included in an authorization request which is sent in step 6 to a user equipment for approval and the reception 8 of an authorization response is waited for. The authorization response is processed by the server in a procedure 10, wherein a check is performed whether it contains a signature of the identifier H by a key ck of the user equipment with the same or a further signing function SO'. If the authorization was initiated by a message from a further entity, the value SO'(ck, H) can be forwarded for evaluation or the approval or disapproval can be confirmed to the further entity after checking the validity of the value SO'(ck, H).

The above embodiments admirably achieve the objects of the invention. However, it will be appreciated that departures can be made by those skilled in the art without departing from the scope of the invention which is limited only by the claims.

## Claims

1. Method for the authorization of transactions, wherein a user equipment (UE) receives an authorization request (6) for a content which is to be authorized with an identifier (H) of a transaction and wherein the user equipment (UE) replies to the request with an authorization response (8), said method comprising the steps of
calculating the identifier (H) from the content,
transmitting the authorization request (6) with the identifier (H) to the user equipment (UE),
reception of the authorization request (6),
determining an indication for the authorization request (6),
output of the indication by the user equipment (UE),
waiting for an input to approve or disapprove the authorization request (6), signing the identifier (H) by a signing function,
sending the authorization response (8) according to the input, wherein an approving authorization response (8) comprises the signed identifier (H).

2. Method according to claim 1, wherein the identifier (H) is a hash value.

3. Method according to claim 1 or 2, wherein a check is performed whether the authorization request (6) comprises a string (T) and the indication is the detected string (T) or a default string else.

4. Method according to any preceding claim, wherein the displayed indication is included in the authorization response (8).

5. Method according to any preceding claim, wherein a check is performed whether a connection is classified as safe and the indication comprises a result of the check or is selected according to the check.

6. Method according to any preceding claim, wherein the authorization request (6) comprises a signature of the sender and a check of the sender signature is performed.

7. Method according to claim 6, wherein the indication comprises a result of the check or is selected according to the check.

8. Method according to any preceding claim, wherein a concatenation of the identifier (H) and at least one further parameter is signed.

9. Method according to any preceding claim, wherein a signature depends on a parameter which varies in consecutive authorization requests or authorization responses.

10. Method according to any preceding claim, wherein the authorization request (6) is sent by a server (MS) after reception of a message from a further entity.

11. Method according to claim 10, wherein the message comprises the indication or a parameter determining the indication.

12. Method according to claim 10 or 11, wherein the server (MS) forwards an approval of the identifier (H) to the further entity.

13. Method according to any of the claims 10 to 12, wherein the server (MS) stores the indication or forwards it to the further entity.

14. Server for processing authorization procedures in a communication system with an interface to exchange messages with user equipment of the communication system, wherein the server has a processing system adapted to send an authorization request (6) for a content which is to be authorized to the user equipment and to receive an authorization response (8) from the user equipment, **characterized in that**
the processing system is further adapted to calculate an identifier (H) from the content and include the identifier (H) into the authorization request (6),
the processing system is further adapted to determine an indication for the content and include the indication into the authorization request (6)
and the server (MS) is adapted to check the authorization response (8) for the identifier (H) signed by the user equipment (UE).

15. Server according to claim 14, wherein the server (MS) comprises an interface to receive messages from a further entity and the processing system is adapted to extract the content for authorization from a message received from the further network entity and to send a reply to the further network entity, wherein the reply is determined by the authorization response.

16. Server according to any of the claims 14 or 15, wherein the server (MS) is adapted to perform at least one step of a method according to any of the claims 1 to 13.

17. User equipment for a communication system, especially for a mobile communication system, with a transmission unit to receive and send messages, the messages comprising authorization requests for a content which is to be authorized and authorization responses, a unit to process input of a user, a unit to perform an output to the user, a unit to sign parameters and a processing system (PS) controlling said units which is adapted to process an authorization request (6) with an identifier (H) of a transaction wherein the identifier (H) is calculated from the content and to reply to the request with an authorization response, wherein the processing system (PS) includes a unit to determine an indication for the request, to initiate the output of the indication by the output unit (OU), to wait for an approval of the request by the user, to initiate the signing of the identifier (H) by a signing function and to initiate the sending of an authorization response (8) with the signed identifier (H) by the transmission unit (TU).

18. User equipment according to claim 17, wherein the processing system (PS) is adapted to perform a check whether the authorization request (6) comprises a string (T) and select the detected string (T) as indication or a default string else.

19. User equipment according to claim 17 or 18, wherein the processing system (PS) includes the displayed indication in the authorization response.

20. User equipment according to any of the claims 17 to 19, wherein the processing system (PS) is adapted to perform a check whether a connection is classified as safe and include the result of the check in the indication or select the indication according to the check.

21. User equipment according to any of the claims 17 to 20, wherein the authorization request (6) comprises a signature of the sender and the processing system (PS) performs a check of the sender signature.

22. User equipment according to claim 21, wherein the processing system (PS) is adapted to include the result of the check in the indication or select the indication according to the check.

23. User equipment according to any of the claims 17 to 22, wherein the processing system (PS) is adapted to sign a concatenation of the identifier (H) and at least one further parameter.

24. User equipment according to any of the claims 17 to 23, wherein the processing system (PS) includes a parameter which varies in consecutive authorization requests (6) or authorization responses (8) into a signed content.

25. Computer program for receiving an authorization request (6) for a content which is to be authorized with an identifier of a transaction and replying to the request with an authorization response the program comprising code for performing the steps of
reception of the authorization request with the identifier (H) which is calculated from the content,
determining an indication for the authorization request (6),
initiating the output of the indication,
waiting for an input approving or disapproving the authorization request, initiating the signing of the identifier (H) by a signing function,
determining the authorization response (8) according to the input, wherein an approving authorization response (8) comprises the signed identifier (H).

26. Computer program according to claim 25, wherein the program performs at least one step of a method according to any of the claims 2 to 9.

## Patentansprüche

1. Verfahren zur Autorisierung von Transaktionen, wobei ein Teilnehmergerät (UE) eine Autorisierungsanforderung (6) für einen Inhalt, welcher autorisiert werden soll, mit einer Kennung (H) einer Transaktion empfängt und wobei das Teilnehmergerät (UE) auf die Anforderung mit einer Autorisierungsantwort (8) antwortet, wobei das Verfahren die folgenden Schritte umfasst:
Berechnen der Kennung (H) aus dem Inhalt,
Übertragen der Autorisierungsanforderung (6) mit der Kennung (H) zu dem Teilnehmergerät (UE),
Empfang der Autorisierungsanforderung (6),
Bestimmen einer Meldung für die Autorisierungsanforderung (6),
Ausgabe der Meldung durch das Teilnehmergerät (UE),
Warten auf eine Eingabe, um die Autorisierungsanforderung (6) zu genehmigen oder abzulehnen,
Signieren der Kennung (H) mittels einer Signierfunktion,
Senden der Autorisierungsantwort (8) entsprechend der Eingabe, wobei eine genehmigende Autorisierungsantwort (8) die signierte Kennung (H) umfasst.

2. Verfahren nach Anspruch 1, wobei die Kennung (H) ein Hashwert ist.

3. Verfahren nach Anspruch 1 oder 2, wobei eine Prüfung durchgeführt wird, ob die Autorisierungsanforderung (6) eine Zeichenkette (T) umfasst und die Meldung die erkannte Zeichenkette (T) oder andernfalls eine Standardzeichenkette ist.

4. Verfahren nach einem der vorhergehenden Ansprüche, wobei die angezeigte Meldung in der Autorisierungsantwort (8) enthalten ist.

5. Verfahren nach einem der vorhergehenden Ansprüche, wobei eine Prüfung durchgeführt wird, ob eine Verbindung als sicher eingestuft ist, und die Meldung ein Ergebnis der Prüfung umfasst oder entsprechend der Prüfung gewählt wird.

6. Verfahren nach einem der vorhergehenden Ansprüche, wobei die Autorisierungsanforderung (6) eine Signatur des Absenders umfasst und eine Prüfung der Absendersignatur durchgeführt wird.

7. Verfahren nach Anspruch 6, wobei die Meldung ein Ergebnis der Prüfung umfasst oder entsprechend der Prüfung gewählt wird.

8. Verfahren nach einem der vorhergehenden Ansprüche, wobei eine Verkettung der Kennung (H) und mindestens eines weiteren Parameters signiert wird.

9. Verfahren nach einem der vorhergehenden Ansprüche, wobei eine Signatur von einem Parameter abhängt, welcher sich in aufeinander folgenden Autorisierungsanforderungen oder Autorisierungsantworten ändert.

10. Verfahren nach einem der vorhergehenden Ansprüche, wobei die Autorisierungsanforderung (6) von einem Server (MS) nach dem Empfang einer Nachricht von einer weiteren Entität gesendet wird.

11. Verfahren nach Anspruch 10, wobei die Nachricht die Meldung oder einen die Meldung bestimmenden Parameter umfasst.

12. Verfahren nach Anspruch 10 oder 11, wobei der Server (MS) eine Genehmigung der Kennung (H) an die weitere Entität weiterleitet.

13. Verfahren nach einem der Ansprüche 10 bis 12, wobei der Server (MS) die Meldung speichert oder sie zu der weiteren Entität weiterleitet.

14. Server zum Verarbeiten von Autorisierungsprozeduren in einem Kommunikationssystem mit einer Schnittstelle, um Nachrichten mit einem Teilnehmergerät des Kommunikationssystems auszutauschen, wobei der Server ein Verarbeitungssystem aufweist, das in der Lage ist, eine Autorisierungsanforderung (6) für einen Inhalt, welcher autorisiert werden soll, an das Teilnehmergerät zu senden und eine Autorisierungsantwort (8) von dem Teilnehmergerät zu empfangen, **dadurch gekennzeichnet, dass**
das Verarbeitungssystem ferner in der Lage ist, eine Kennung (H) aus dem Inhalt zu berechnen und die Kennung (H) in die Autorisierungsanforderung (6) einzufügen,
das Verarbeitungssystem ferner in der Lage ist, eine Meldung für den Inhalt zu bestimmen und die Meldung in die Autorisierungsanforderung (6) einzufügen,
und der Server (MS) in der Lage ist, die Autorisierungsantwort (8) hinsichtlich der von dem Teilnehmergerät (UE) signierten Kennung (H) zu prüfen.

15. Server nach Anspruch 14, wobei der Server (MS) eine Schnittstelle umfasst, um Nachrichten von einer weiteren Entität zu empfangen, und das Verarbeitungssystem in der Lage ist, den Inhalt zur Autorisierung aus einer Nachricht zu extrahieren, die von der weiteren Netzentität empfangen wurde, und eine Antwort an die weitere Netzentität zu senden, wobei die Antwort durch die Autorisierungsantwort bestimmt wird.

16. Server nach einem der Ansprüche 14 oder 15, wobei der Server (MS) in der Lage ist, mindestens einen Schritt eines Verfahrens nach einem der Ansprüche 1 bis 13 auszuführen.

17. Teilnehmergerät für ein Kommunikationssystem, speziell für ein Mobilkommunikationssystem, mit einer Übertragungseinheit, um Nachrichten zu empfangen und zu senden, wobei die Nachrichten Autorisierungsanforderungen für einen Inhalt, welcher autorisiert werden soll, und Autorisierungsantworten umfassen, einer Einheit, um Eingaben eines Teilnehmers zu verarbeiten, einer Einheit, um eine Ausgabe an den Teilnehmer durchzuführen, einer Einheit, um Parameter zu signieren, und einem diese Einheiten steuernden Verarbeitungssystem (PS), welches in der Lage ist, eine Autorisierungsanforderung (6) mit einer Kennung (H) einer Transaktion zu verarbeiten, wobei die Kennung (H) aus dem Inhalt berechnet wird, und auf die Anforderung mit einer Autorisierungsantwort zu antworten, wobei das Verarbeitungssystem (PS) eine Einheit enthält, um eine Meldung für die Anforderung zu bestimmen, um die Ausgabe der Meldung durch die Ausgabeeinheit (OU) auszulösen, um auf eine Genehmigung der Anforderung durch den Teilnehmer zu warten, um das Signieren der Kennung (H) mittels einer Signierfunktion auszulösen und um das Senden einer Autorisierungsantwort (8) mit der signierten Kennung (H) durch die Übertragungseinheit (TU) auszulösen.

18. Teilnehmergerät nach Anspruch 17, wobei das Verarbeitungssystem (PS) in der Lage ist, eine Prüfung durchzuführen, ob die Autorisierungsanforderung (6) eine Zeichenkette (T) umfasst, und die erkannte Zeichenkette (T) als Meldung zu wählen oder andernfalls eine Standardzeichenkette.

19. Teilnehmergerät nach Anspruch 17 oder 18, wobei das Verarbeitungssystem (PS) die angezeigte Meldung in die Autorisierungsantwort einfügt.

20. Teilnehmergerät nach einem der Ansprüche 17 bis 19, wobei das Verarbeitungssystem (PS) in der Lage ist, eine Prüfung durchzuführen, ob eine Verbindung als sicher eingestuft ist, und das Ergebnis der Prüfung in die Meldung einzufügen oder die Meldung entsprechend der Prüfung zu wählen.

21. Teilnehmergerät nach einem der Ansprüche 17 bis 20, wobei die Autorisierungsanforderung (6) eine Signatur des Absenders umfasst und das Verarbeitungssystem (PS) eine Prüfung der Absendersignatur durchführt.

22. Teilnehmergerät nach Anspruch 21, wobei das Verarbeitungssystem (PS) in der Lage ist, das Ergebnis der Prüfung in die Meldung einzufügen oder die Meldung entsprechend der Prüfung zu wählen.

23. Teilnehmergerät nach einem der Ansprüche 17 bis 22, wobei das Verarbeitungssystem (PS) in der Lage ist, eine Verkettung der Kennung (H) und mindestens eines weiteren Parameters zu signieren.

24. Teilnehmergerät nach einem der Ansprüche 17 bis 23, wobei das Verarbeitungssystem (PS) einen Parameter, welcher sich in aufeinander folgenden Autorisierungsanforderungen (6) oder Autorisierungsantworten (8) ändert, in einen signierten Inhalt einfügt.

25. Computerprogramm zum Empfangen einer Autorisierungsanforderung (6) für einen Inhalt, welcher autorisiert werden soll, mit einer Kennung einer Transaktion und Antworten auf die Anforderung mit einer Autorisierungsantwort, wobei das Programm Code zum Ausführen der folgenden Schritte umfasst:
Empfang der Autorisierungsanforderung mit der Kennung (H), welche aus dem Inhalt berechnet wird,
Bestimmen einer Meldung für die Autorisierungsanforderung (6),
Auslösen der Ausgabe der Meldung,
Warten auf eine Eingabe, welche die Autorisierungsanforderung genehmigt oder ablehnt,
Auslösen des Signierens der Kennung (H) mittels einer Signierfunktion,
Bestimmen der Autorisierungsantwort (8) entsprechend der Eingabe, wobei eine genehmigende Autorisierungsantwort (8) die signierte Kennung (H) umfasst.

26. Computerprogramm nach Anspruch 25, wobei das Programm mindestens einen Schritt eines Verfahrens nach einem der Ansprüche 2 bis 9 ausführt.

## Revendications

1. Procédé pour l'autorisation de transactions, dans lequel un équipement d'utilisateur (UE) reçoit une demande d'autorisation (6) pour un contenu, qui doit être autorisé avec un identifiant (H) d'une transaction et dans lequel l'équipement d'utilisateur (UE) répond à la demande avec une réponse d'autorisation (8), ledit procédé comprenant les étapes consistant à
calculer l'identifiant (H) à partir du contenu,
transmettre la demande d'autorisation (6) avec l'identifiant (H) à l'équipement d'utilisateur (UE),
recevoir la demande d'autorisation (6),
déterminer une indication pour la demande d'autorisation (6),
délivrer l'indication par l'équipement d'utilisateur (UE),
attendre une entrée pour approuver ou désapprouver la demande d'autorisation (6),
signer l'identifiant (H) par une fonction de signature,
envoyer la réponse d'autorisation (8) en fonction de l'entrée, moyennant quoi une réponse d'autorisation d' approbation (8) comprend l' identifiant signé (H).

2. Procédé selon la revendication 1, dans lequel l'identifiant (H) est une valeur de hachage.

3. Procédé selon la revendication 1 ou 2, dans lequel une vérification est effectuée de ce que la demande d'autorisation (6) comprend une chaîne (T) et l'indication est la chaîne détectée (T) ou sinon une chaîne par défaut.

4. Procédé selon l'une quelconque des revendications précédentes, dans lequel l'indication affichée est incluse dans la réponse d'autorisation (8).

5. Procédé selon l'une quelconque des revendications précédentes, dans lequel une vérification est effectuée de ce que une connexion est classifiée comme étant sécurisée et l'indication comprend un résultat de la vérification ou est sélectionné en fonction de la vérification.

6. Procédé selon l'une quelconque des revendications précédentes, dans lequel la demande d'autorisation (6) comprend une signature de l'émetteur et une vérification de la signature d'émetteur est effectuée.

7. Procédé selon la revendication 6, dans lequel l'indication comprend un résultat de la vérification ou est sélectionné en fonction de la vérification.

8. Procédé selon l'une quelconque des revendications précédentes, dans lequel une concaténation de l'identifiant (H) et d'au moins un paramètre supplémentaire est signée.

9. Procédé selon l'une quelconque des revendications précédentes, dans lequel une signature dépend d'un paramètre qui varie dans des demandes d'autorisation ou des réponses d'autorisation consécutives.

10. Procédé selon l'une quelconque des revendications précédentes, dans lequel la demande d'autorisation (6) est envoyée par un serveur (MS) après la réception d'un message provenant d'une entité supplémentaire.

11. Procédé selon la revendication 10, dans lequel le message comprend l'indication ou un paramètre déterminant l'indication.

12. Procédé selon la revendication 10 ou 11, dans lequel le serveur (MS) achemine une approbation de l'identifiant (H) vers l'entité supplémentaire.

13. Procédé selon l'une quelconque des revendications 10 à 12, dans lequel le serveur (MS) mémorise l'indication ou l'achemine vers l'entité supplémentaire.

14. Serveur pour traiter des procédures d'autorisation dans un système de communication comportant une interface pour échanger des messages avec un équipement d'utilisateur du système de communication, dans lequel le serveur a un système de traitement adapté afin d'envoyer une demande d'autorisation (6) pour un contenu qui doit être autorisé à l'équipement d'utilisateur et de recevoir une réponse d'autorisation (8) provenant de l'équipement d'utilisateur, **caractérisé en ce que**
le système de traitement est en outre adapté afin de calculer un identifiant (H) provenant du contenu et d'inclure l'identifiant (H) dans la demande d'autorisation (6),
le système de traitement est en outre adapté afin de déterminer une indication pour le contenu et d'inclure l'indication dans la demande d'autorisation (6),
et le serveur (MS) est adapté afin de vérifier la réponse d'autorisation (8) pour l'identifiant (H) signé par l'équipement d'utilisateur (UE).

15. Serveur selon la revendication 14, dans lequel le serveur (MS) comprend une interface afin de recevoir des messages provenant d'une entité supplémentaire et le système de traitement est adapté afin d'extraire le contenu pour l'autorisation d'un message reçu en provenance de l'entité de réseau supplémentaire et d'envoyer une réponse à l'entité de réseau supplémentaire, moyennant quoi la réponse est déterminée par la réponse d'autorisation.

16. Serveur selon une quelconque des revendications 14 ou 15, dans lequel le serveur (MS) est adapté afin d'effectuer au moins une étape d'un procédé selon une quelconque des revendications 1 à 13.

17. Equipement d'utilisateur pour un système de communication, notamment pour un système de communication mobile, comportant une unité de transmission pour recevoir et envoyer des messages, les messages comprenant des demandes d'autorisation pour un contenu qui doit être autorisé et des réponses d'autorisation, une unité pour traiter des entrées d'un utilisateur, une unité pour effectuer une sortie vers l'utilisateur, une unité pour signer des paramètres et un système de traitement (PS) commandant lesdites unités qui est adapté afin de traiter une demande d'autorisation (6) avec un identifiant (H) d'une transaction, l'identifiant (H) étant calculé à partir du contenu, et de répondre à la demande avec une réponse d'autorisation, dans lequel le système de traitement (PS) inclut une unité afin de déterminer une indication pour la demande, de lancer la délivrance de l'indication par l'unité de sortie (OU), d'attendre une approbation de la demande par l'utilisateur, de lancer la signature de l'identifiant (H) par une fonction de signature et de lancer l'envoi d'une réponse d'autorisation (8) avec l'identifiant signé (H) par l'unité de transmission (TU).

18. Equipement d'utilisateur selon la revendication 17, dans lequel le système de traitement (PS) est adapté afin d'effectuer une vérification de ce que la demande d'autorisation (6) comprend une chaîne (T) et de détecter la chaîne sélectionnée (T) comme indication ou sinon comme chaîne par défaut.

19. Equipement d'utilisateur selon la revendication 17 ou 18, dans lequel le système de traitement (PS) inclut l'indication affichée dans la réponse d'autorisation.

20. Equipement d'utilisateur selon une quelconque des revendications 17 à 19, dans lequel le système de traitement (PS) est adapté afin d'effectuer une vérification de ce que une connexion est classifiée comme étant sécurisée et d'inclure le résultat de la vérification dans l'indication ou sélectionner l'indication en fonction de la vérification.

21. Equipement d'utilisateur selon une quelconque des revendications 17 à 20, dans lequel la demande d'autorisation (6) comprend une signature de l'émetteur et le système de traitement (PS) effectue une vérification de la signature d'émetteur.

22. Equipement d'utilisateur selon la revendication 21, dans lequel le système de traitement (PS) est adapté afin d'inclure le résultat de la vérification dans l'indication ou de sélectionner l'indication en fonction de la vérification.

23. Equipement d'utilisateur selon une quelconque des revendications 17 à 22, dans lequel le système de traitement (PS) est adapté afin de signer une concaténation de l'identifiant (H) et d'au moins un paramètre supplémentaire.

24. Equipement d'utilisateur selon une quelconque des revendications 17 à 23, dans lequel le système de traitement (PS) inclut un paramètre qui varie dans des demandes d'autorisation (6) ou des réponses d'autorisation (8) consécutives en un contenu signé.

25. Programme informatique pour recevoir une demande d'autorisation (6) pour un contenu qui doit être autorisé avec un identifiant d'une transaction et pour répondre à la demande avec une réponse d'autorisation, le programme comprenant du code pour effectuer les étapes consistant à
recevoir la demande d'autorisation avec l'identifiant (H) qui est calculé à partir du contenu,
déterminer une indication pour la demande d'autorisation (6),
lancer la délivrance de l'indication,
attendre une entrée approuvant ou désapprouvant la demande d'autorisation,
lancer la signature de l'identifiant (H) par une fonction de signature,
déterminer la réponse d'autorisation (8) en fonction de l'entrée, moyennant quoi une réponse d'autorisation d'approbation (8) comprend l'identifiant signé (H).

26. Programme informatique selon la revendication 25, dans lequel le programme effectue au moins une étape d'un procédé selon une quelconque des revendications 2 à 9.
